# EUROPÄISCHE PATENTSCHRIFT

(11) **EP 2 699 343 B1**
(45) Veröffentlichungstag und Bekanntmachung des Hinweises auf die Patenterteilung: **22.08.2018**
(21) Anmeldenummer: 12717112.2
(22) Anmeldetag: 23.04.2012
(51) Int. Cl.: B01J 21/04, B01J 35/02, B01J 37/00, C07D 301/10

(54) **PORÖSES ALUMINIUMOXID**
POROUS ALUMINUM OXIDE
OXYDE D'ALUMINIUM POREUX

(30) Priorität: 21.04.2011 DE 102011007916
(43) Veröffentlichungstag der Anmeldung: 26.02.2014
(73) Patentinhaber: CeramTec GmbH, 73207 Plochingen (DE)
(72) Erfinder: HEINL, Roland, 95615 Marktredwitz (DE); SCHRÖTER, Peter, 95632 Wunsiedel (DE); STÖCKL, Klaus, 95195 Röslau (DE)
(74) Vertreter: Fehrenbacher, Eckhard Anton
(86) Internationale Anmeldenummer: PCT/EP2012/057391
(87) Internationale Veröffentlichungsnummer: WO 2012/143559

(56) Entgegenhaltungen:
- EP-A1- 0 805 146
- WO-A1-01/79135
- DE-A1- 19 602 525
- US-A1- 2003 162 655

## Beschreibung

Gegenstand der vorliegenden Erfindung ist poröses Aluminiumoxid, Verfahren zu dessen Herstellung sowie desssen Verwendung.

Poröses Aluminiumoxid wird oft als Trägermaterial für Filtrationsaufgaben oder als Trägermaterial für Katalysatoren (Katalysatorträger) angewendet. In der Anwendung als Katalysatorträger, insbesondere als Trägermaterial für Gasphasenreaktionen von Ethylen zu Ethylenoxid wird üblicherweise eine Al₂O₃-Keramik hoher Porosität verwendet. Die Forderung nach möglichst hoher Porosität kollidiert jedoch mit dem Wunsch nach möglichst festen Trägern, also solchen mit geringem Abrieb. Für Gasphasenreaktionen sind ferner eine gewisse spezifische Oberfläche (BET 0,5 bis 1,3 m²/g) und ein möglichst geringer Diffusionswiderstand beim Durchdringen der Reaktanden erforderlich. Eine multimodale (mindestens bimodale) Porenverteilungscharakteristik begünstigt das Diffusionsverhalten. Die chemische Beschaffenheit kann laut Stand der Technik variieren, jedoch haben sich alpha-Al₂O₃-Träger in der Praxis bewährt. Ferner wird auf Begleitelemente verwiesen, die die Selektivität negativ beeinflussen können wie z.B. hoher SiO₂-Gehalt.

Bei der Herstellung von porösen Gerüststrukturen wird üblicherweise der notwendige Sintervorgang nicht bis zur Verdichtung aufrechterhalten, sondern unterbrochen. Eine Erhöhung der Porosität wird dabei oft durch organische Additive mit Platzhalterfunktion erreicht. Dabei werden Porenverteilungen erreicht, die mit den Korngrößen der verwendeten Rohstoffe in direkter Relation stehen. Große Porenkanäle werden also bevorzugt durch große Körner erzeugt (vgl. US 2003/162655). Die Verwendung von großen Körnern führt aber zu geringen spezifischen Oberflächen und geringer mechanischer Stabilität, sofern keine nennenswerte Sekundärphasennmenge zugegeben wird. Auch höhere Mengen an organischen Additiven ändern dieses Verhalten nicht grundlegend, da die Gerüststruktur aus Al₂O₃ besteht.

WO 01/79135 A1 zeigt ein Verfahren zur Herstellung gesinterter mikrokristalliner, dichter Formkörper auf der Basis von α-Al₂O₃ wobei das Pulver mit einem Binder, einem Lösungsmittel und zusätzlichen Hilfsstoffen vermischt wird.

EP 0 805 146 A1 offenbart die Herstellung von Katalysatorträgern, die SiO₂-freies α-Al₂O₃ enthalten.

DE 196 02 525 A1 beschreibt die Herstellung mikrokristallin aufgebauter, sphärischer Sinterformkörper mit hoher Dichte auf Basis von α-Al₂O₃ unter Verwendung von Polyacrylsäuren und Polyvinylalkoholen.

Aufgabe der vorliegenden Erfindung war daher, ein Trägermaterial für beispielsweise Filtrationsaufgaben oder für Katalysatoren (Katalysatorträger) bereitzustellen, das die Nachteile des Standes der Technik nicht aufweist. Aufgabe der vorliegenden Erfindung war insbesondere, ein Trägermaterial für beispielsweise Filtrationsaufgaben oder für Katalysatoren (Katalysatorträger) mit möglichst hoher mechanisch stabiler Gerüststruktur bereitzustellen.

Erfindungsgemäß gelöst wurde diese Aufgabe durch ein Trägermaterial mit den Kennzeichen des Hauptanspruchs. Das erfindungsgemäße Trägermaterial weist einen möglichst hohen Al₂O₃-Gehalt auf. Bevorzugte Ausführungsformen sind in den Unteransprüchen charakterisiert.

Bezogen auf die Summe aller Anorganikkomponenten enthält das erfindungsgemäße Trägermaterial 90 bis nahezu 100 Gew.-%, vorzugsweise 92 bis 98 Gew.-%, besonders bevorzugt über 98 Gew.-% Al₂O₃. Erfindungsgemäß verwendbar sind grundsätzlich sämtliche bekannten Al₂O₃-Phasen. Bevorzugt eingesetzt wird erfindungsgemäß alpha-Al₂O₃, sowie Al₂O₃-Vorläufer, beispielsweise Al(OH)₃, AlOOH oder Übergangstonerden. Rohstoffbedingt kann das erfindungsgemäße Trägermaterial Spuren von Verunreinigungen enthalten. Vorzugsweise enthält das erfindungsgemäße Trägermaterial weniger als 0,05 Gew.-% TiO₂, unter 0,2 Gew.-% aber mehr als 0,02 Gew.-%, insbesondere unter 0,1 Gew.-% aber mehr als 0,02 Gew.-% Na₂O und/oder unter 1 Gew.-%, insbesondere unter 0,6 Gew.-% SiO₂.

Das erfindungsgemäße Trägermaterial weist eine hochporöse, mit einer mechanisch stabilen, bauteildurchdringenden Gerüststruktur auf, wobei diese erfindungsgemäß mechanisch stabile Gerüststruktur, die ihm seine mechanische Beständigkeit verleiht, erfindungsgemäß nicht über eine hohe Sekundärphasenmenge erzielt wird, sondern erfindungsgemäß durch eine spezielle Sintertechnik gekoppelt mit einer speziellen Rohstoffauswahl, der zu verwendenden Mengen und Korngrößen. Diese Maßnahmen ermöglichen die erfindungsgemäß gewollte hochporöse, mechanisch stabile, bauteildurchdringende Gerüststruktur.

Die Auswahl der einzusetzenden Aluminiumoxide sowie der zu verwendenden Organik-Mengen und Organik-Korngrößen, ist erfindungswesentlich, da neben geringer Schwindung durch relativ grobes Al₂O₃ mit Korngrößen von 3 bis 5 µm auch feinkörniges Al₂O₃ mit Korngrößen von 0,3 bis 1 µm zum Erreichen der Sinterung und der mechanischen Stabilität, ebenso wie für eine definierte spezifische Oberfläche erfindungsgemäß nötig ist.

Versuche haben gezeigt, dass die Verwendung von Al₂O₃-Vorläufern, beispielsweise Al(OH)₃, AlOOH oder Übergangstonerden, für die erfindungsgemäß geforderte hohe mechanische Stabilität besonders vorteilhaft sind.

Erfindungsgemäß wird das hochporöse, mechanisch stabile, bauteildurchdringende Gerüst aus alpha-Al₂O₃ durch die Verwendung bestimmter Additive bei der Herstellung des erfindungsgemäßen Trägermaterials gebildet. Eine besondere Rolle spielen dabei die erfindungsgemäß ausgewählten Additive, die für die Porenbildung verantwortlich sind, nachfolgend Porosierungsmittel genannt.

Porosierungsmittel, sowohl anorganischer wie auch organischer Art, mit bestimmten Korngrößen, sind Materialien, die der Ausgangsmischung zugegeben werden, und die nach dem Sintern, nach dem Brennen, vollständig aus dem Träger entfernt, vollständig ausgebrannt werden und dabei eine kontrollierte Porosität in dem erfindungsgemäßen Trägermaterial ausbilden. Als Porosierungsmittel können beispielsweise kohlenstoffhaltige Materialien wie Kohlenstoffpulver, Graphit, pulverförmige Kunststoffe wie Polyethylen, Polystyrol und Polycarbonat, Harz, Stärke, Cellulose und Materialien auf der Basis von Cellulose, Holzmehle und andere pflanzliche Materialien wie gemahlene Nussschalen, beispielsweise Pekan-, Cashew-, Walnuss- und Haselnussschalen. Auch bestimmte Bindemittel auf der Basis von Kohlenstoff können als Porosierungsmittel dienen. Bevorzugte Porosierungsmittel sind organische Porosierungsmittel in nicht quellfähiger Form, insbesondere von Cellulose abgeleitete Materialien wie gemahlene Nussschalen, vorzugsweise Walnussschalenmehl.

Erfindungsgemäß bevorzugt werden bei der Herstellung grobe Organikkomponenten, vorzugsweise Walnussschalenmehl mit einem relativen Korngrößenmaximum von 10 bis 20µm und/oder mit einem relativen Korngrößenmaximum von 100 bis 500 µm. Die erfindungsgemäß erhältliche, hochporöse, mechanisch stabile, zusammenhängende, bauteildurchdringende Gerüststruktur des alpha-Al₂O₃ wird, ähnlich einer Sekundärphase, in den Zwickeln der Additivkomponente angeordnet und bildet so ein zweites, bauteildurchdringendes Gerüst.

Zur Herstellung einer extrudierbaren Ausgangsmischung für das erfindungsgemäßen Trägermaterial werden erfindungsgemäß an sich bekannte Bindemittel verwendet, beispielsweise Cellulosen und substituierte Cellulosen, wie Methylcellulose, Ethylcellulose und Carboxyethylcellulose, Stearate wie organische Stearate, z.B. Methyl- oder Ethylstearat, Wachse, Polyolefinoxide, Mischungen solcher Bindemittel oder ähnliche Substanzen. Erfindungsgemäß bevorzugt sind wasserquellfähige organische Bindemittel.

Zur Minimierung der Reibungskräfte bei der Herstellung des erfindungsgemäßen Trägermaterials können Gleitmittel eingesetzt werden, beispielsweise kolloidale Kieselsäuredispersionen, Wachse und/oder Mineralölraffinate.

Die erfindungsgemäß ausgewählten Ausgangskomponenten werden zu einer extrusionsfähigen Masse gemischt und die extrusionsfähige Masse wird anschließend mit geeigneten Schneide- und Trocknungsverfahren zu beispielsweise Zylindern, Ringen oder ähnlichen Formen geformt. Ringförmige Geometrien können beispielsweise einen Außendurchmesser von 6 bis 9,5 mm, einen Innendurchmesser von 2 bis 5 mm und eine Länge von 5 bis 9,5 mm aufweisen. Die so erhaltenen Formkörper werden dann im Temperaturbereich zwischen 1350°C und 1550°C bei Haltezeiten von 1 h bis 10 h, vorzugsweise bei Temperaturen von 1480°C und einer Haltezeit von 2 h gesintert.

Das so erhältliche erfindungsgemäße Trägermaterial ist hochporös, mit einer mechanisch stabilen, bauteildurchdringenden Gerüststruktur aus alpha-Al₂O₃ versehen und löst die der Erfindung zugrunde liegende Aufgabe.

Es enthält vorzugsweise zu 30 bis 90 Gew.% (bezogen auf die Summe aller Anorganikkomponenten) einer ersten alpha-Al₂O₃-Komponente mit einer Primärkristallkorngröße von 1 bis 3 µm und einer Agglomeratgröße von 3 bis 5 µm und zu 10 bis 70 Gew.-% (bezogen auf die Summe aller Anorganikkomponenten) einer zweiten alpha-Al₂O₃-Komponente mit einer Primärkristallkorngröße von 0,3 bis 1 µm und einer Agglomeratgröße von 0,5 bis 1 µm.

In einer weiteren bevorzugten Ausführungsform enthält das hochporöse, mit einer mechanisch stabilen, bauteildurchdringenden Gerüststruktur versehene erfindungsgemäße Trägermaterial zusätzlich zur ersten und zweiten alpha-Al₂O₃-Komponente bis zu 50 Gew.-% (bezogen auf die Summe aller Anorganikkomponenten) einer Al₂O₃-Komponente, die während der Herstellung in situ aus einem Al₂O₃-Vorläufermaterial gebildet wurde. vorzugsweise aus Al(OH)₃, AIOOH oder Übergangstonerden, besonders bevorzugt aus Al(OH)₃ mit einer Korngröße von 1,3 µm.

In einer weiteren bevorzugten Ausführungsform weist das hochporöse, mit einer mechanisch stabilen, bauteildurchdringenden Gerüststruktur versehene erfindungsgemäße Trägermaterial eine multimodale Porenstruktur bei hoher Porosität und gleichzeitig hoher mechanischer Beständigkeit auf.

In einer weiteren bevorzugten Ausführungsform weist das hochporöse, mit einer mechanisch stabilen, bauteildurchdringenden Gerüststruktur versehene erfindungsgemäße Trägermaterial eine spezifische Oberfläche (gemessen nach BET) von 0,5 bis 1,3 m²/g, insbesondere eine spezifische Oberfläche von 0,5 bis 0,95 m²/g auf.

In einer weiteren bevorzugten Ausführungsform des hochporösen, mit einer mechanisch stabilen, bauteildurchdringenden Gerüststruktur versehene erfindungsgemäßen Trägermaterials liegt der nach ASTM D 4058-81 bestimmte Gewichtsverlust, als Maß für die Abriebfestigkeit, bei 5 bis 40%.

In einer weiteren bevorzugten Ausführungsform kann das hochporöse, mit einer mechanisch stabilen, bauteildurchdringenden Gerüststruktur versehene erfindungsgemäße Trägermaterial zwischen 41% und 60 % (gemessen nach ASTM C 373-56) Wasser aufnehmen.

In einer weiteren bevorzugten Ausführungsform weist das hochporöse, mit einer mechanisch stabilen, bauteildurchdringenden Gerüststruktur versehene erfindungsgemäße Trägermaterial Bruchkräfte von über 50 N auf (im Scheiteldruckverfahren bestimmt).

Das hochporöse, mit einer mechanisch stabilen, bauteildurchdringenden Gerüststruktur versehene erfindungsgemäße Trägermaterial weist eine Porendurchmesserverteilungskurve (gemessen durch Quecksilberdruckporosimetrie), die ein relatives Maximum zwischen 0,3 und 1,3 µm und ein weiteres relatives Maximum zwischen 3 und 6 µm auf.

In einer weiteren bevorzugten Ausführungsform weist das hochporöse, mit einer mechanisch stabilen, bauteildurchdringenden Gerüststruktur versehene erfindungsgemäße Trägermaterial einen TiO₂-Gehalt von unter 0,05 Gew.-% auf.

In einer weiteren bevorzugten Ausführungsform weist das hochporöse, mit einer mechanisch stabilen, bauteildurchdringenden Gerüststruktur versehene erfindungsgemäße Trägermaterial einen Na₂O-Gehalt von unter 0,2 Gew.-% aber mehr als 0,02 Gew.-%, insbesondere unter 0,1 Gew.-% aber mehr als 0,02 Gew.-% auf.

In einer weiteren bevorzugten Ausführungsform weist das hochporöse, mit einer mechanisch stabilen, bauteildurchdringenden Gerüststruktur versehene erfindungsgemäße Trägermaterial einen SiO₂-Gehalt von unter 1 Gew.-%, insbesondere von unter 0,6 Gew.-% SiO₂ auf.

Weiterhin betrifft die vorliegende Erfindung ein Verfahren zur Herstellung des mit einer mechanisch stabilen, bauteildurchdringenden Gerüststruktur versehenen erfindungsgemäßen Trägermaterials, bei dem, bezogen auf die Summe aller Anorganikkomponenten, 90 bis nahezu 100 Gew.-%, vorzugsweise 92 bis 98 Gew.-%, besonders bevorzugt über 98 Gew.-% Al₂O₃, zwischen 5 Gew.-% und 60 Gew.-% organische Porosierungsmittel in nicht quellfähiger Form, zwischen 0,5 Gew.-% und 3 Gew.-% wasserquellfähige organische Binder, zwischen 0,5 Gew.-% und 5 Gew.-% organische Flüssigkeiten zur Minimierung der Reibungskräfte, sowie zwischen 10 Gew.-% und 30 Gew.-% Wasser zu einer extrusionsfähigen Masse gemischt, die extrusionsfähige Masse anschließend mit geeigneten Schneide- und Trocknungsverfahren zu Formkörpern, beispielsweise zu Zylindern, Ringen oder ähnlichen Formen geformt wird und die so erhaltenen Formkörper im Temperaturbereich zwischen 1350°C und 1550°C bei Haltezeiten von 1 h bis 10 h, vorzugsweise bei Temperaturen von 1480°C und einer Haltezeit von 2 h gesintert werden.

Besonders bevorzugt ist ein Verfahren zur Herstellung des mit einer mechanisch stabilen, bauteildurchdringenden Gerüststruktur versehenen erfindungsgemäßen Trägermaterials, bei dem als Al₂O₃ alpha-Al₂O₃, Al₂O₃-Vorläufer, beispielsweise Al(OH)₃, AlOOH, Übergangstonerden oder Mischungen dieser Al₂O₃ Komponenten eingesetzt wird.

Weiterhin bevorzugt ist ein Verfahren zur Herstellung des mit einer mechanisch stabilen, bauteildurchdringenden Gerüststruktur versehenen erfindungsgemäßen Trägermaterials, bei dem als organische Porosierungsmittel ein oder mehrere organische Porosierungsmittel mit einem relativen Korngrößenmaximum von 10 bis 20 µm und / oder mit einem relativen Korngrößenmaximum von 100 bis 500 µm verwendet werden.

Weiterhin bevorzugt ist ein Verfahren zur Herstellung des mit einer mechanisch stabilen, bauteildurchdringenden Gerüststruktur versehenen erfindungsgemäßen Trägermaterials, bei dem die organischen Porosierungsmittel aus Stärke, Walnussschalenmehl, Pekanussschalenmehl, Polystyrol, Polyethylen Polycarbonat, Cellulose, Holzmehle oder Kohlenstoff ausgewählt werden.

Weiterhin bevorzugt ist ein Verfahren zur Herstellung des mit einer mechanisch stabilen, bauteildurchdringenden Gerüststruktur versehenen erfindungsgemäßen Trägermaterials, bei dem die extrusionsfähige Masse mit geeigneten Schneide- und Trocknungsverfahren zu ringförmigen Geometrien geformt werden, die beispielsweise einen Außendurchmesser von 6 bis 9,5 mm, einen Innendurchmesser von 2 bis 5 mm und eine Länge von 5 bis 9,5 mm aufweisen.

Weiterhin betrifft die vorliegende Erfindung die Verwendung des mit einer mechanisch stabilen, bauteildurchdringenden Gerüststruktur versehenen erfindungsgemäßen Trägermaterials als Katalysatorträger, als Katalysatorträger für die Ethylenoxidsynthese, zu Filtrationszwecken und/oder zu Filtrationszwecken für die fest-flüssig-Trennung.

Die in Tabelle 1 aufgeführten, mit Ex 1 bis Ex 3 gekennzeichneten Beispiele sollen die vorliegende Erfindung näher erläutern, ohne sie einzuschränken. Die in dieser Tabelle mit Comp 1 bis Comp 5 gekennzeichneten Beispiele sind nicht erfindungsgemäß sondern dienen als Vergleich.

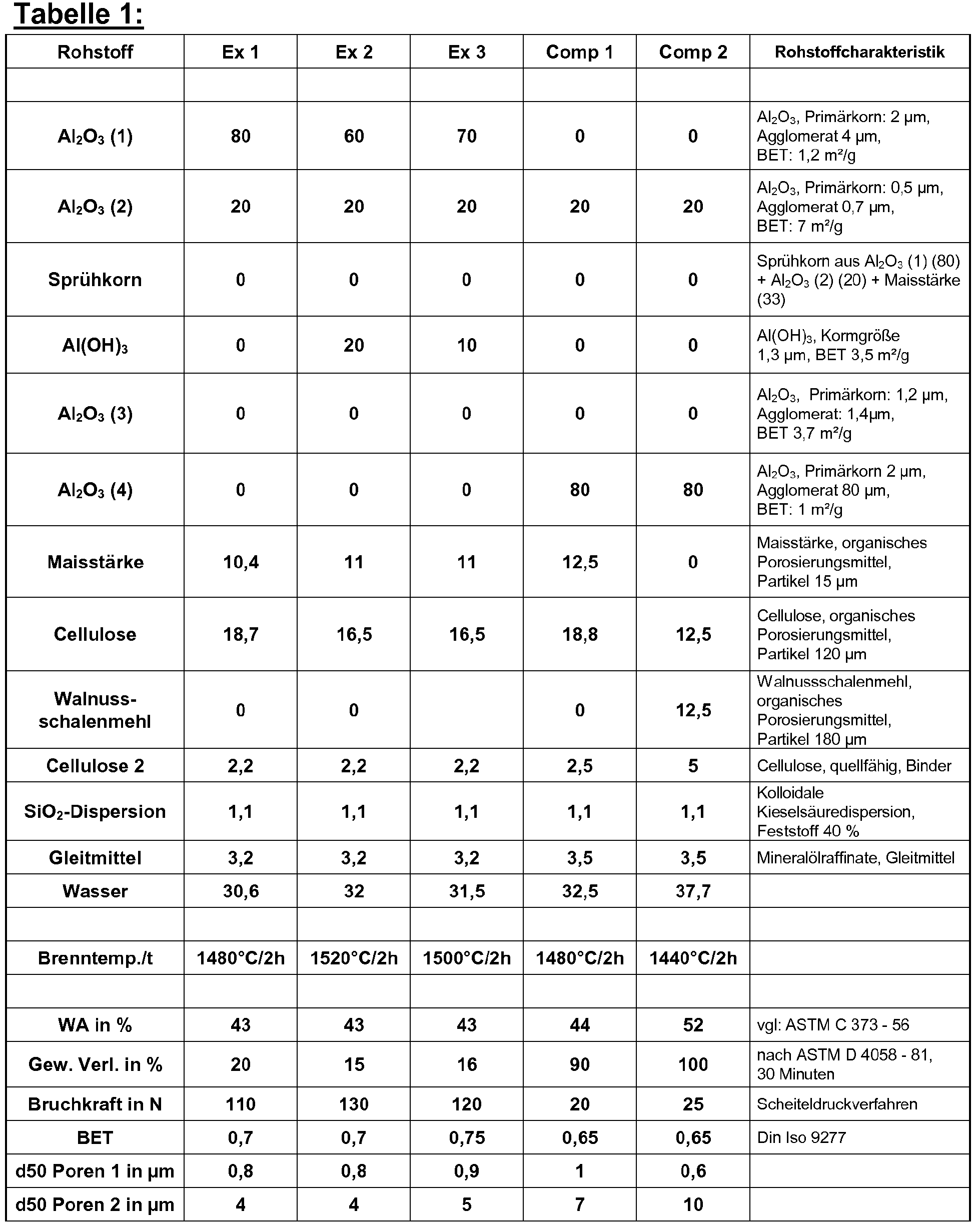

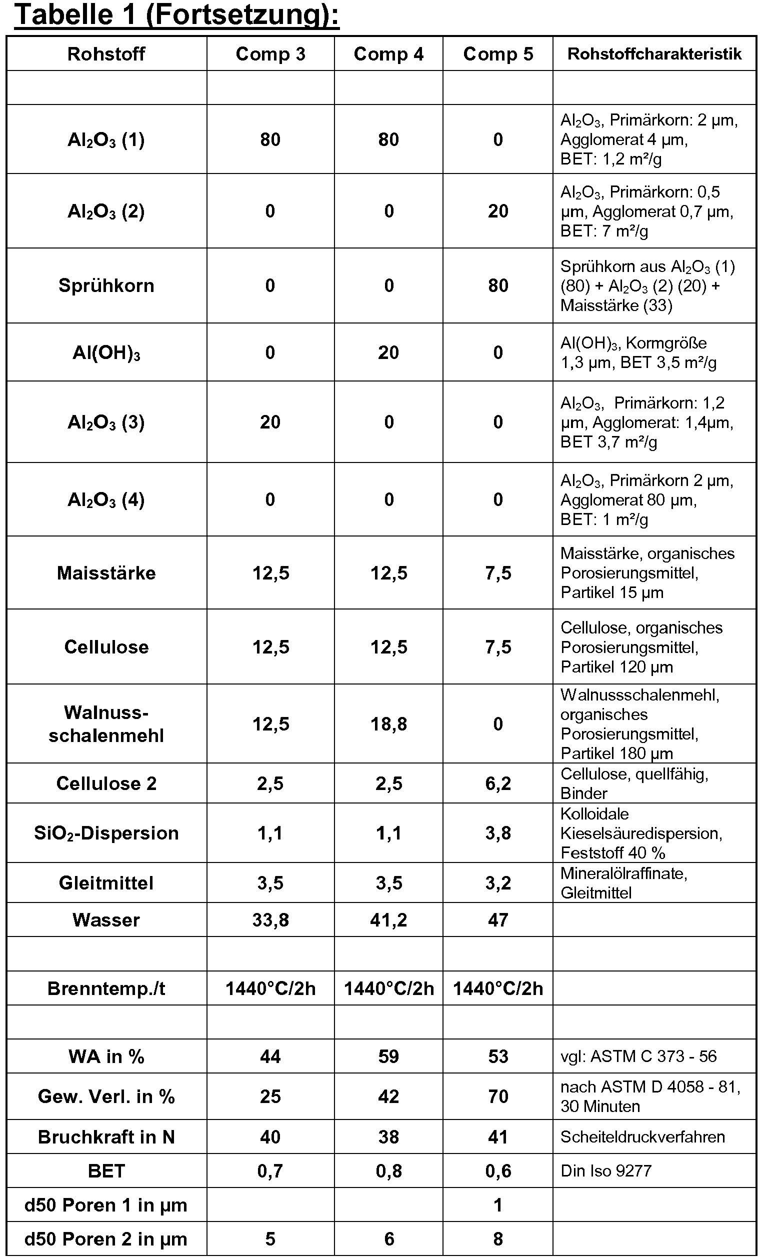

## Patentansprüche

1. Trägermaterial, **dadurch gekennzeichnet, dass** es hochporös und mit einer mechanisch stabilen, bauteildurchdringenden Gerüststruktur aus alpha-Al₂O₃ versehen ist, wobei es eine multimodale Porenstruktur bei hoher Porosität und gleichzeitig hoher mechanischer Beständigkeit und dessen Porendurchmesserverteilungskurve (gemessen durch Quecksilberdruckporosimetrie) ein relatives Maximum zwischen 0,3 und 1,3 µm und ein weiteres relatives Maximum zwischen 3 und 6 µm aufweist und wobei es vorzugsweise zu 30 bis 90 Gew.% (bezogen auf die Summe aller Anorganikkomponenten) einer ersten alpha-Al₂O₃-Komponente mit einer Primärkristallkorngröße von 1 bis 3 µm und einer Agglomeratgröße von 3 bis 5 µm und zu 10 bis 70 Gew.-% (bezogen auf die Summe aller Anorganikkomponenten) einer zweiten alpha-Al₂O₃-Komponente mit einer Primärkristallkorngröße von 0,3 bis 1 µm und einer Agglomeratgröße von 0,5 bis 1 µm enthält.

2. Trägermaterial gemäß Anspruch 1, **dadurch gekennzeichnet, dass** es zusätzlich zur ersten und zweiten alpha-Al₂O₃-Komponente bis zu 50 Gew.-% (bezogen auf die Summe aller Anorganikkomponenten) einer Al₂O₃-Komponente, die während der Herstellung in situ aus einem Al₂O₃-Vorläufermaterial gebildet wurde, vorzugsweise aus Al(OH)₃, AlOOH oder Übergangstonerden, besonders bevorzugt aus Al(OH)₃ mit einer Korngröße von 1,3 µm enthält.

3. Trägermaterial gemäß einem der Ansprüche 1 oder 2, **dadurch gekennzeichnet, dass** es eine spezifische Oberfläche (gemessen nach BET) von 0,5 bis 1,3 m²/g, insbesondere eine spezifische Oberfläche von 0,5 bis 0,95 m²/g aufweist.

4. Trägermaterial gemäß einem oder mehreren der vorhergehenden Ansprüche, **dadurch gekennzeichnet, dass** der nach ASTM D 4058-81 bestimmte Gewichtsverlust, als Maß für die Abriebfestigkeit, bei 5 bis 40% liegt.

5. Trägermaterial gemäß einem oder mehreren der vorhergehenden Ansprüche, **dadurch gekennzeichnet, dass** es zwischen 41 % und 60 % (gemessen nach ASTM C 373-56) Wasser aufnehmen kann.

6. Trägermaterial gemäß einem oder mehreren der vorhergehenden Ansprüche, **dadurch gekennzeichnet, dass** es Bruchkräfte von über 50 N auf (im Scheiteldruckverfahren bestimmt) aufweist.

7. Trägermaterial gemäß einem oder mehreren der vorhergehenden Ansprüche, **dadurch gekennzeichnet, dass** es einen TiO₂-Gehalt von unter 0,05 Gew.-% und/oder einen SiO₂-Gehalt von unter 1 Gew.-%, insbesondere von unter 0,6 Gew.-% SiO₂ aufweist.

8. Trägermaterial gemäß einem oder mehreren der vorhergehenden Ansprüche, **dadurch gekennzeichnet, dass** es einen Na₂O-Gehalt von unter 0,2 Gew.-%, aber mehr als 0,02 Gew.-%, insbesondere unter 0,1 Gew.-%, aber mehr als 0,02 Gew.-% aufweist.

9. Verfahren zur Herstellung des Trägermaterials gemäß einem oder mehreren der vorhergehenden Ansprüche, **dadurch gekennzeichnet, dass**, bezogen auf die Summe aller Anorganikkomponenten, 90 bis nahezu 100 Gew.-%, vorzugsweise 92 bis 98 Gew.-%, besonders bevorzugt über 98 Gew.-% Al₂O₃, zwischen 5 Gew.-% und 60 Gew.-% organische Porosierungsmittel in nicht quellfähiger Form, zwischen 0,5 Gew.-% und 3 Gew.-% wasserquellfähige organische Binder, zwischen 0,5 Gew.-% und 5 Gew.-% organische Flüssigkeiten zur Minimierung der Reibungskräfte, sowie zwischen 10 Gew.-% und 30 Gew.-% Wasser zu einer extrusionsfähigen Masse gemischt, die extrusionsfähige Masse anschließend mit geeigneten Schneide- und Trocknungsverfahren zu Formkörpern, beispielsweise zu Zylindern, Ringen oder ähnlichen Formen geformt wird und die so erhaltenen Formkörper im Temperaturbereich zwischen 1350°C und 1550°C bei Haltezeiten von 1 h bis 10 h, vorzugsweise bei Temperaturen von 1480°C und einer Haltezeit von 2 h gesintert werden.

10. Verfahren gemäß Anspruch 9, **dadurch gekennzeichnet, dass** als Al₂O₃ alpha-Al₂O₃, Al₂O₃-Vorläufer, beispielsweise Al(OH)₃, AlOOH, Übergangstonerden oder Mischungen dieser Al₂O₃ Komponenten eingesetzt wird.

11. Verfahren gemäß Anspruch 9 oder 10, **dadurch gekennzeichnet, dass** als organische Porosierungsmittel ein oder mehrere organische Porosierungsmittel mit einem relativen Korngrößenmaximum von 10 bis 20 µm und / oder mit einem relativen Korngrößenmaximum von 100 bis 500 µm verwendet werden.

12. Verwendung des Trägermaterials gemäß einem oder mehreren der Ansprüche 1 bis 8 als Katalysatorträger, als Katalysatorträger für die Ethylenoxidsynthese, zu Filtrationszwecken und/oder zu Filtrationszwecken für die fest-flüssig-Trennung.

## Claims

1. A substrate material, **characterised in that** it is highly porous and is provided with a mechanically stable, component-penetrating framework structure of alpha-Al₂O₃, wherein it has a multimodal pore structure with high porosity and at the same time high mechanical strength, and the pore diameter distribution curve thereof (measured by mercury intrusion porosimetry) has a relative maximum between 0.3 and 1.3 µm and a further relative maximum between 3 and 6 µm, and wherein it preferably contains up to 30 to 90% by weight (based on the sum of all the inorganic components) of a first alpha-Al₂O₃ component having a primary crystal grain size of 1 to 3 µm and an agglomerate size of 3 to 5 µm and up to 10 to 70% by weight (based on the sum of all the inorganic components) of a second alpha-Al₂O₃ component having a primary crystal grain size of 0.3 to 1 µm and an agglomerate size of 0.5 to 1 µm.

2. A substrate material according to claim 1, **characterised in that** in addition to the first and second alpha-Al₂O₃ component it contains up to 50% by weight (based on the sum of all the inorganic components) of an Al₂O₃ component, which has been formed during the production *in situ* from an Al₂O₃ precursor material, preferably of Al(OH)₃, AlOOH or transition aluminas, particularly preferably of Al(OH)₃ having a grain size of 1.3 µm.

3. A substrate material according to one of claims 1 or 2, **characterised in that** it has a specific surface area (measured according to the BET method) of 0.5 to 1.3 m²/g, in particular a specific surface area of 0.5 to 0.95 m²/g.

4. A substrate material according to one or more of the preceding claims, **characterised in that** the weight loss, determined as a measure of the abrasion resistance according to ASTM D 4058-81, is 5 to 40%.

5. A substrate material according to one or more of the preceding claims, **characterised in that** it can absorb water in quantities between 41% and 60% (measured according to ASTM C 373-56).

6. A substrate material according to one or more of the preceding claims, **characterised in that** it has breaking forces of over 50 N (determined in the vertex pressure process) .

7. A substrate material according to one or more of the preceding claims, **characterised in that** it has a TiO₂ content of less than 0.05% by weight and/or an SiO₂ content of less than 1% by weight, in particular of less than 0.6% by weight SiO₂.

8. A substrate material according to one or more of the preceding claims, **characterised in that** it has an Na₂O content of less than 0.2% by weight, but more than 0.02% by weight, in particular less than 0.1% by weight, but more than 0.02% by weight.

9. A method for producing the substrate material according to one or more of the preceding claims, **characterised in that**, based on the sum of all the inorganic components, 90 to almost 100% by weight, preferably 92 to 98% by weight, particularly preferably over 98% by weight Al₂O₃, between 5% by weight and 60% by weight organic pore-forming agents in non-swellable form, between 0.5% by weight and 3% by weight water-swellable organic binders, between 0.5% by weight and 5% by weight organic liquids for minimizing the friction forces, and also between 10% by weight and 30% by weight water are mixed to form an extrudable compound, the extrudable compound is subsequently moulded with suitable cutting and drying processes to form moulded bodies, for example cylinders, rings or similar shapes, and the moulded bodies thus obtained are sintered in the temperature range between 1350°C and 1550°C with residence times of 1 h to 10 h, preferably at temperatures of 1480°C and with a residence time of 2 h.

10. A method according to claim 9, **characterised in that** alpha-Al₂O₃, Al₂O₃ precursors, for example Al(OH)₃, AlOOH, transition aluminas or mixtures of these Al₂O₃ components is/are used as Al₂O₃.

11. A method according to claim 9 or 10, **characterised in that** one or more organic pore-forming agents having a relative grain size maximum of 10 to 20 µm and/or having a relative grain size maximum of 100 to 500 µm is/are used as organic pore-forming agents.

12. Use of the substrate material according to one or more of claims 1 to 8 as a catalyst support, as a catalyst support for ethylene-oxide synthesis, for filtration purposes and/or for filtration purposes for solid-liquid separation.

## Revendications

1. Matériau support, **caractérisé en ce qu'**il est très poreux et muni d'une armature en alpha-Al₂O₃, stable du point de vue mécanique et traversante, lequel matériau support présente, pour une porosité élevée et en même temps une stabilité mécanique élevée, une structure de pores multimodale et une courbe de distribution des diamètres de pores, mesurée par porosimétrie au mercure, avec un maximum relatif entre 0,3 et 1,3 µm et un autre maximum relatif entre 3 et 6 µm, et contient de préférence de 30 à 90 % en poids, par rapport à la somme de tous les constituants inorganiques, d'une première fraction composante en alpha-Al₂O₃ dont les grains cristallins primaires ont une taille de 1 à 3 µm et les agglomérats ont une taille de 3 à 5 µm, et de 10 à 70 % en poids, par rapport à la somme de tous les constituants inorganiques, d'une deuxième fraction composante en alpha-Al₂O₃ dont les grains cristallins primaires ont une taille de 0,3 à 1 µm et les agglomérats ont une taille de 0,5 à 1 µm.

2. Matériau support conforme à la revendication 1, **caractérisé en ce qu'**il contient, outre les première et deuxième fractions composantes en alpha-Al₂O₃, jusqu'à 50 % en poids, par rapport à la somme de tous les constituants inorganiques, d'une fraction composante en Al₂O₃, formée pendant la préparation in situ à partir d'un matériau précurseur d'alumine, de préférence à partir d'Al(OH)₃, d'AlOOH ou d'alumines de transition, en particulier à partir d'Al(OH)₃ dont les grains ont une taille de 1,3 µm.

3. Matériau support conforme à la revendication 1 ou 2, **caractérisé en ce qu'**il présente une aire spécifique, mesurée par la méthode BET, de 0,5 à 1,3 m²/g, et en particulier, une aire spécifique de 0,5 à 0,95 m²/g.

4. Matériau support conforme à l'une ou plusieurs des revendications précédentes, **caractérisé en ce que** la perte de poids, déterminée suivant la norme ASTM D 4058-81 en tant que mesure de la résistance à l'attrition, vaut de 5 à 40 %.

5. Matériau support conforme à l'une ou plusieurs des revendications précédentes, **caractérisé en ce qu'**il peut absorber entre 41 et 60 % d'eau, pourcentage mesuré suivant la norme ASTM C 373-56.

6. Matériau support conforme à l'une ou plusieurs des revendications précédentes, **caractérisé en ce qu'**il présente une force de rupture, mesurée selon le procédé de pression sur un sommet, de plus de 50 N.

7. Matériau support conforme à l'une ou plusieurs des revendications précédentes, **caractérisé en ce qu'**il présente, une teneur en TiO₂ de moins de 0,05 % en poids, et/ou une teneur en SiO₂ de moins de 1 % en poids, et en particulier de moins de 0,6 % en poids de SiO₂.

8. Matériau support conforme à l'une ou plusieurs des revendications précédentes, **caractérisé en ce qu'**il présente une teneur en Na₂O de moins de 0,2 % en poids, mais de plus de 0,02 % en poids, et en particulier de moins de 0,1 % en poids, mais de plus de 0,02 % en poids.

9. Procédé de fabrication d'un matériau support conforme à l'une ou plusieurs des revendications précédentes, **caractérisé en ce qu'**on mélange, par rapport à la somme de tous les constituants inorganiques, de 90 à environ 100 % en poids, de préférence de 92 à 98 % en poids et mieux encore plus de 98 % en poids d'alumine Al₂O₃, entre 5 % en poids et 60 % en poids d'agents porogènes organiques sous forme non gonflante, entre 0,5 % en poids et 3 % en poids de liant organique gonflant dans l'eau, entre 0,5 % en poids et 5 % en poids de liquides organiques pour minimiser les forces de frottement, et entre 10 % en poids et 30 % en poids d'eau, pour en faire une masse extrudable, on fait ensuite de cette masse extrudable, par des opérations appropriées de coupe et de séchage, des corps façonnés, par exemple en cylindres, en anneaux ou en objets de formes similaires, et l'on fritte les corps façonnés ainsi obtenus à une température située entre 1350 et 1550 °C durant un laps de temps de 1 heure à 10 heures, et de préférence, à 1480 °C pendant 2 heures.

10. Procédé conforme à la revendication 9, **caractérisé en ce qu'**on utilise comme alumine Al₂O₃ de l'alpha-Al₂O₃, un précurseur d'Al₂O₃, par exemple Al(OH)₃, AlOOH, une alumine de transition ou un mélange de ces composants de type Al₂O₃.

11. Procédé conforme à la revendication 9 ou 10, **caractérisé en ce que** l'on utilise en tant qu'agents porogènes organiques un ou plusieurs agent(s) porogène(s) organique(s) présentant un maximum relatif de taille des grains situé dans la gamme des 10 à 20 µm et/ou un maximum relatif de taille des grains situé dans la gamme des 100 à 500 µm.

12. Utilisation d'un matériau support conforme à l'une ou plusieurs des revendications précédentes comme support de catalyseur, en tant que support de catalyseur pour synthèse d'oxyde d'éthylène, à des fins de filtration et/ou de séparation solide-liquide par filtration.
